# EUROPEAN PATENT APPLICATION

(11) **EP 3 422 276 A1**
(43) Date of publication of application: **02.01.2019**
(21) Application number: 17177823.6
(22) Date of filing: 26.06.2017
(51) Int. Cl.: G06Q 20/38, G06Q 20/40

(54) **ONE-TIME VIRTUAL CARD NUMBERS FOR IMMEDIATE INSTALMENT PAYMENTS**

(71) Applicant: Mastercard International Incorporated, New York, NY 10577 (US)
(72) Inventor: FREIRE, Ramon, 28109 Madrid (ES); CAVA, Carlos Aguado, 28250 Madrid (ES); SABY, Bertrand, 28012 Madrid (ES); FONSECA, Rui Tomas Pereira Carvalho, 28036 Madrid (ES)
(74) Representative: Gill Jennings & Every LLP

(57) **Abstract**

The present disclosure relates to enabling payment by instalments as desired, on a purchase-by-purchase basis. More specifically, an aspect relates to a computer-implemented method for providing a consumer with the means to set up instalment payments from a pre-existing account to complete a transaction, on request. The method comprises: receiving data indicating a price together with an identifier from a user device; responsive thereto, obtaining one or more sets of instalment conditions and transmitting them to the user device; subsequently receiving a simulation according to one of the sets of instalment conditions from the user device; responsive thereto, obtaining a pre-authorisation of the simulation, obtaining a one-time virtual card number (OTVCN) and transmitting the OTVCN to the user device. Further aspects relate to a computer-readable medium, a computer and a system.

## Description

### FIELD

The present disclosure relates to enabling payment by instalments as desired, on a purchase-by-purchase basis.

More specifically, an aspect relates to a computer-implemented method for providing a consumer with the means to set up instalment payments from a pre-existing account to complete a transaction, on request.

In a further aspect, the disclosure relates to a computer-readable medium storing computer-executable instructions which, when executed by a processor, cause the method to be performed. Another aspect relates to a computer, or system comprising a plurality of computers in communication with one another, configured to perform the method. Yet another aspect relates to a system comprising such a computer or system and a user device operated by the consumer.

### BACKGROUND

There are well-established payment networks which allow consumers to make purchases using credit accounts, so that the cost to the consumer can be delayed and/or spread over time. Transactions on a credit account within a billing period are aggregated, then the consumer is issued with a bill for the aggregate amount, which they can pay off according to whatever payment plan they have agreed with the issuer of the credit account.

Some consumers are unable or unwilling to make use of traditional credit accounts, for example due to poor credit history or lack of regular income. These consumers generally use debit accounts, where transactions are funded directly as lump sums at the time of the transaction. There may however still be occasions where a purchase is desired, but it is not possible or not convenient to fund the transaction in total immediately. In addition, consumers who do make use of credit accounts may find that their standard payment plan is not suitable for particular purchases. Such situations may arise for example when a one-off high value purchase is desired.

There is therefore consumer demand (and thus also merchant demand) for flexibility in how transactions are funded.

One system which attempts to meet this need involves a card association partnering with merchants by providing the merchants with software which allows a few different options for payment by instalment to be provided to the consumer at the point of sale (POS). However, since this system is not tailored to individual consumers, the merchant must accept the risk of the consumer not being able to keep up their payments. This system also requires effort on the merchant's part to install the software and train staff in its use.

Some chip and PIN (personal identification number) payment cards also save multiple options for payment by instalment on-chip, for selection by the consumer on payment at a POS. While this system does allow a certain degree of tailoring to individual consumers, the options provided are both limited and static, i.e. unable to dynamically react to changes in the consumer's circumstances.

What is needed is a means of providing flexibility in the funding options made available to consumers, in a manner which can react dynamically to their circumstances, and which allows a transaction to proceed efficiently and securely.

### SUMMARY

According to a first aspect, there is provided a computer-implemented method comprising: receiving data indicating a price together with an identifier from a user device; responsive thereto, obtaining one or more sets of instalment conditions and transmitting them to the user device; subsequently receiving a simulation according to one of the sets of instalment conditions from the user device; responsive thereto, obtaining a pre-authorisation of the simulation, obtaining a one-time virtual card number (OTVCN) and transmitting the OTVCN to the user device.

The method could further comprise: subsequent to transmitting the OTVCN to the user device, receiving the OTVCN in a transaction request from a payment network; responsive thereto, obtaining an authorisation of the transaction request and transmitting the authorisation of the transaction request to the payment network.

The one or more sets of instalment conditions could be determined according to a risk profile linked to the identifier.

The identifier could comprise two or more of a user device identifier, an application identifier, a user identifier and an account identifier.

The OTVCN could be: obtained, and/or transmitted, and/or received in a tokenised form.

The method could further comprise, as part of the obtaining of the pre-authorisation, determining that the simulation is not expired.

The method could further comprise, as part of the obtaining of the authorisation, determining that the OTVCN is not expired.

The method could be performed at a service provider server, wherein obtaining the pre-authorisation of the simulation comprises: relaying the simulation to an issuer server, the issuer server being a server of an issuer of a payment account with which the identifier is linked; and receiving the pre-authorisation of the simulation from the issuer server.

Obtaining the one or more sets of instalment conditions could comprise: transmitting a request for instalment conditions to the issuer server, the request indicating the price and the account; and subsequently receiving the one or more sets of instalment conditions from the issuer server.

Obtaining the OTVCN could comprise, responsive to obtaining the pre-authorisation of the simulation, generating the OTVCN locally.

Obtaining the authorisation of the transaction request could comprise: relaying the transaction request to the issuer server; and subsequently receiving authorisation of the transaction request from the issuer server.

The service provider could be a card association.

According to a second aspect there is provided a computer-readable medium storing computer-executable instructions which, when executed by a processor, cause the method of the first aspect to be performed.

According to a third aspect there is provided a computer, or system comprising a plurality of computers in communication with one another, configured to perform the method of the first aspect.

According to a fourth aspect there is provided a system comprising the computer or system of the third aspect and the user device.

### BRIEF DESCRIPTION OF THE FIGURES

Aspects of the present disclosure will now be described by way of example with reference to the accompanying figures. In the figures:
Figure 1 illustrates schematically an example system;
Figure 2 is a flowchart setting out the main steps of an example method;
Figure 3A is a flowchart beginning to set out in detail one example of how such a method could be implemented;
Figure 3B is a flowchart continuing from Figure 3A;
Figure 3C is a flowchart continuing from Figure 3B;
Figure 3D is a flowchart continuing from Figure 3C; and
Figure 4 schematically illustrates an example computer.

### DETAILED DESCRIPTION OF THE FIGURES

The following description is presented to enable any person skilled in the art to make and use the system, and is provided in the context of a particular application. Various modifications to the disclosed embodiments will be readily apparent to those skilled in the art.

Disclosed herein is a computer-implemented method for providing a consumer with the means to set up instalment payments from a pre-existing account to complete a transaction, on request, by making use of one-time virtual card numbers (OTVCNs). Herein, "one-time" indicates single use only.

Data indicating the price of a desired purchase are provided, together with an identifier to allow the consumer's payment account to be identified. This data (and optionally other data) is used to determine one or more suitable sets of instalment conditions. The consumer can then confirm they wish to use one of these sets of instalment conditions, creating a "simulation" (i.e., a particular set of instalment conditions accepted by the consumer) which can be pre-authorised. Once this procedure is complete, the consumer's user device is provided with an OTVCN, which can be used to complete the transaction in the same manner as a traditional payment card number (e.g. primary account number, PAN).

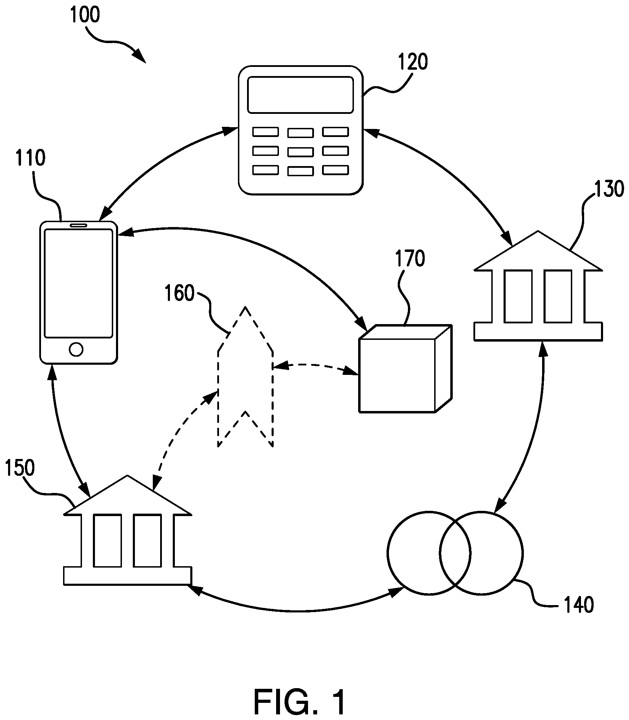

Figure 1 illustrates schematically an example system 100 in which such a method can be used. A consumer has a user device 110. This may be a mobile device such as a smartphone, smartwatch or tablet, or a fixed device such as a personal computer (PC). Either way, the device may be capable of making e-commerce payments over an internet connection. In the case of a mobile device, it may alternatively or additionally be capable of making in-store payments, for example using contactless (e.g. near field communication, NFC) technology.

The user device 110 can communicate, whether over the internet or via an in-store, e.g. contactless, link, with a merchant point of sale (POS). In the e-commerce example, the POS could be virtual.

The POS 120 can communicate with an acquirer server 130, the server of the bank with which the merchant's account for receipt of payments is held.

The acquirer 130 is part of a payment network administered by a card association server 140. The acquirer server and card association server can communicate with one another as illustrated.

Also part of the payment network and thus capable of communication with the card association server 140 is an issuer server 150, the server of the bank with which the consumer's payment account is held.

The issuer server 150 can also communicate with the user device 110, for example via an API (application programming interface) to an application stored on the user device.

A typical transaction made using the user device 110 begins with the provision of payment account credentials stored on the user device, or provided to the user device via a user interface by the consumer, to the POS 120. A transaction request is then made of the issuer server 150 via relay through the acquirer server 130 and the card association server 140. The issuer server then checks the consumer's payment account and, provided all is well, provides authorisation of the transaction request to the POS 120 via relay through the card association server 140 and the acquirer server 130. A confirmation may also be provided to the user device 110, either by the POS 120 or the issuer server 150.

The method described herein is carried out by a service provider server 170. This could be a separate server administered by a third party. Alternatively, some or all of its functions could be carried out by one or a combination of the card association server 140 and the issuer server 150.

The method described herein may optionally comprise tokenisation of the OTVCN. Where this is present, a token provider 160 may communicate with one or both of the issuer server 150 and the service provider server 170.

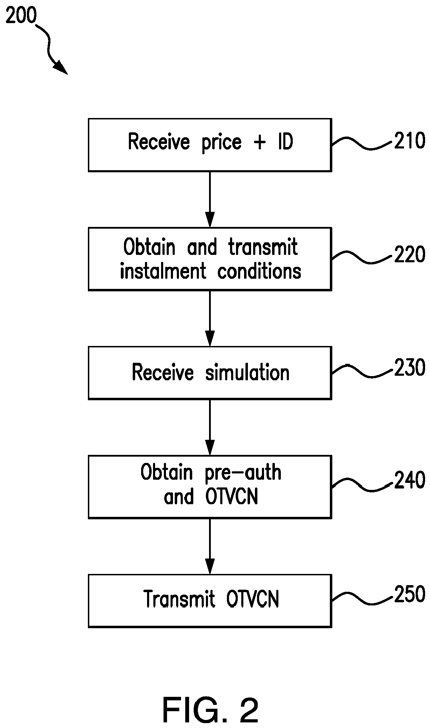

Figure 2 sets out the main steps of an example method 200. At step 210, data indicating a price is received together with an identifier from a user device. Responsive thereto, at step 220 one or more sets of instalment conditions are obtained and transmitted to the user device. Subsequently, at step 230 a simulation according to one of the sets of instalment conditions is received from the user device. Responsive thereto, at step 240 a pre-authorisation of the simulation and an OTVCN are obtained, and the OTVCN is transmitted to the user device.

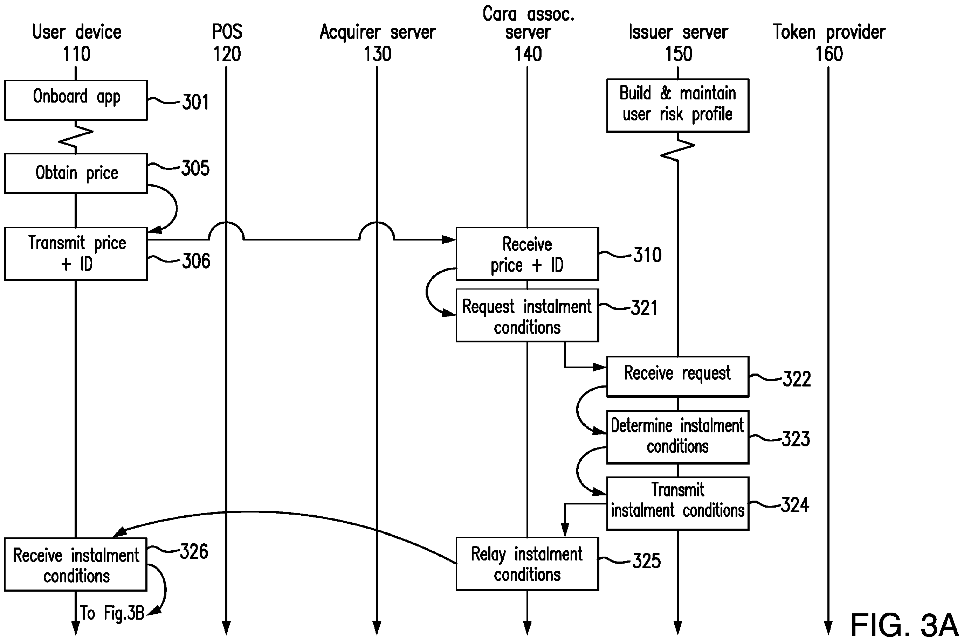

Figures 3A to 3D set out in detail one example of how such a method could be implemented. In this example, the steps of method 200 are carried out by a combination of the card association server 140 and the issuer server 150, with no third party service provider 170 being required. Tokenisation of the OTVCN by the token provider 160 is also included, for improved security.

Starting with Figure 3A, before the main part of the method gets underway, at step 301 an application is onboarded onto the user device 110 to enable its participation. The application could for example be provided by the issuer, e.g. with a module based on a software development kit (SDK) developed by the card association.

Also separately from the main part of the method, the issuer server 150 builds and maintains a consumer risk profile for the consumer at step 302. This is updated according to the current state of the consumer's account with the issuer, historical activity on the account and any other pertinent information the issuer server can obtain, such as the consumer's employment status and credit score.

When the consumer wishes to explore options for making a transaction by instalments, they provide their user device 110 with the price of the proposed purchase. The user device 110 may obtain the price at step 305 in many different ways. For example, in an in-store scenario the consumer may type the price using a keyboard/keypad or touchscreen, speak the price into a microphone connected to speech to text software, take a photograph of a price label using a camera of the device connected to optical character recognition (OCR) software, or scan a barcode or QR code on the item they are interested in purchasing. In an e-commerce scenario, opening the app onboarded at step 301, or performing some action within it, may cause it to harvest price data from an open web page. Alternatively, the user could also type or speak the price as before.

Once the user device 110 has obtained the price, at step 306 it transmits the price, together with an identifier to the card association server 140, for example via an API. The identifier could identify the payment account, the consumer, the user device or any combination of these and/or other data, so long as at least one of the card association server 140 and the issuer server 150 has access to sufficient data to link the identifier to the correct consumer risk profile. Such data could be stored locally on one or both of those servers, or could be accessible to them via communication with another computer, for example via a network connection. The security of the method is improved the greater the number of components of the identifier. Optionally additional data could be transmitted with the price and identifier, for example data indicating the merchant (e.g. as determined via geolocation of the user device if it is mobile), or data indicating the product or service the consumer wishes to purchase. Such additional data can be used later in the determination of suitable instalment conditions, and/or in the updating of the consumer risk profile.

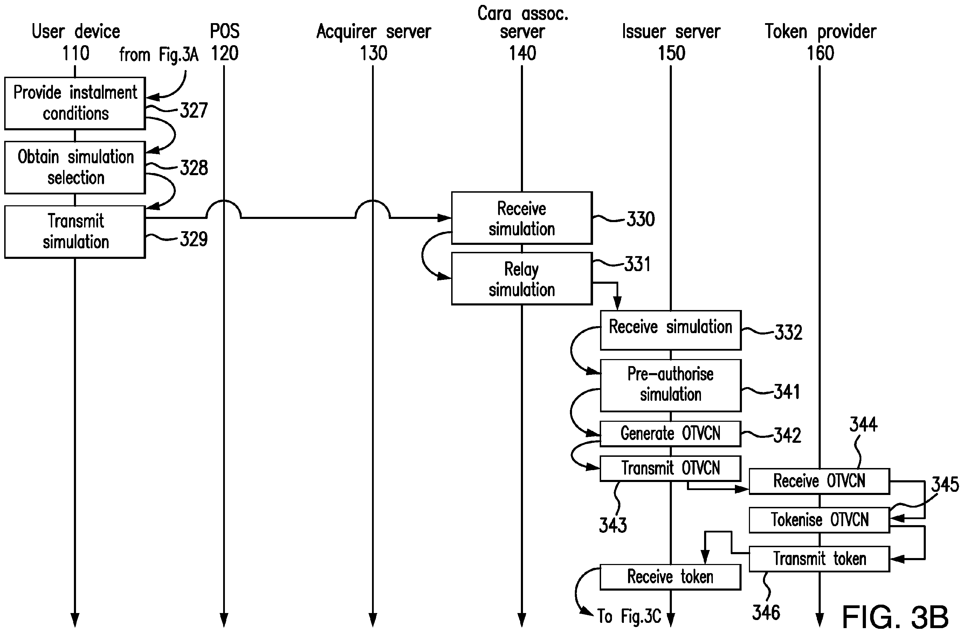

At step 310 the card association server 140 receives the price and the identifier, then at step 321 it requests instalment conditions from the issuer server 150. At step 322 the issuer server 150 receives the request and at step 323 it determines one or more sets of suitable instalment conditions according to the risk profile linked to the identifier. These could for example set the amounts and timings of the instalments to be taken from the consumer's payment account, and any fees or interest rates linked to the provision of the instalment service and/or failure by the consumer to keep their account sufficiently topped up for instalments to be taken on schedule. The instalment conditions are transmitted to the card association server 140 at step 324, which then relays them to the user device 110 at step 325. The instalment conditions are received by the user device 110 at step 326, which takes us on to Figure 3B.

At step 327 the user device 110 provides the sets of instalment conditions to the consumer via a user interface device, for example a screen, monitor, or speaker. The consumer then selects whichever set of conditions they prefer (or confirms they wish to go ahead if only one set of conditions is provided), so that the user device obtains a simulation in accordance with the selected/confirmed set of instalment conditions from a user interface device at step 328. (Any unselected sets of instalment conditions are no longer available for selection after this.) The user device 110 then transmits the simulation to the card association server 140 at step 329.

The card association server 140 receives the simulation at step 330, then relays it to the issuer server 150 at step 331. At step 332 the issuer server 150 receives the simulation.

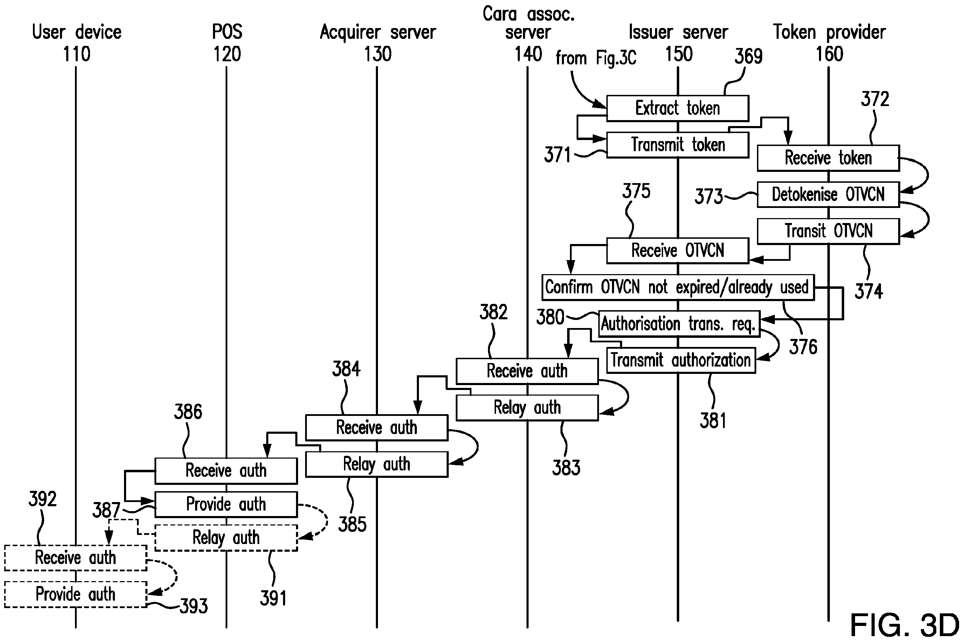

The issuer server 150 pre-authorises the simulation at step 341. This may comprise, for example, confirming that the simulation received matches one of the sets of instalment conditions previously transmitted at step 323. In some examples, the pre-authorisation could alternatively or additionally comprise confirming that the simulation has not expired. For example, each set of instalment conditions may be provided at step 323 together with an expiry time, for example 24 hours after creation, so that payments by instalment are only accepted where the conditions are determined according to an up to date consumer risk profile. (In this example, this optional check is performed later, during the final authorisation; see step 376 of Figure 3D.)

At step 342 the issuer server 150 generates an OTVCN. This may be done in response to the pre-authorisation, or before or in parallel with it. At step 343 the OTVCN is then transmitted to the token provider 160, where it is received at step 344.

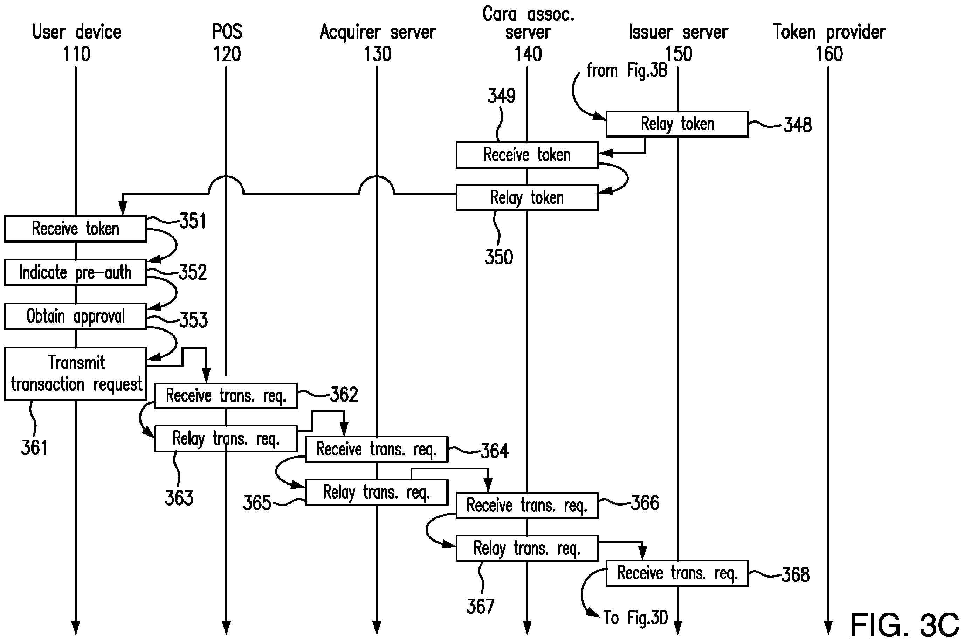

At step 345 the OTVCN is tokenised by the token provider 160. The resulting token is then transmitted at step 346. The token is received by the issuer server 150 at step 347, which takes us to Figure 3C where it is then relayed to the card association server 140 at step 348. The card association server 140 then likewise receives the token at step 349 and relays it to the user device 110 at step 350, where it is received at step 351.

At step 352 the user device 110 indicates to the consumer that pre-authorisation has been given and gives the consumer the opportunity to confirm that they wish the transaction to go ahead. The user provides their approval via a user interface device, so that the user device obtains their approval at step 353. The transaction can then proceed as for a normal payment card transaction, but with the tokenised OTVCN replacing the usual payment account credentials.

The transaction begins at step 361 with the user device 110 transmitting a transaction request to the POS 120 via any of the usual means. Steps 353 and 361 could be concatenated into a single step, for example if a user interface device of the user device 110 instructs the consumer to tap the user device 110 on an NFC reader of the POS 120 to confirm they wish to go ahead, or if a single click is all that is required to confirm they wish to go ahead with an e-commerce transaction, and to transmit the transaction request.

The transaction request is received by the POS 120 at step 362 then relayed to the acquirer server 130 at step 363. It is received at step 364 then relayed on to the card association server 140 at step 365. Similarly, the card association server 140 receives the request at step 366 then relays it on to the issuer server 150 at step 367. The transaction request is received by the issuer server 150 at step 368, which takes us to Figure 3D.

At step 369, the issuer server 150 extracts the token from the transaction request, then transmits the token to the token provider 160 at step 371. The token provider 160 receives the token at step 372, detokenises it to recover the OTVCN at step 373, then transmits the OTVCN to the issuer server 150 at step 374.

At step 375 the issuer server 150 receives the OTVCN, then at step 376 confirms that it has not expired or already been used. The transaction request is authorised at step 380 and the authorisation transmitted to the card association server 140 at step 381. The authorisation is received by the card association server 140 at step 382, relayed on to the acquirer server 130 at step 383, where it is received at step 384 and relayed onto the POS at step 385.

The POS receives the authorisation at step 386 then provides it to the consumer and/or a member of staff of the merchant via a user interface device at step 387 so that the goods or services requested by the consumer can be provided, optionally with a receipt. The authorisation can optionally be relayed by the POS 120 to the user device 110 at step 391, where it can be received at step 392 and provided to the consumer via a user interface device at step 393. Alternatively, if confirmation of the authorisation at the user interface is desired, this could be provided by the card association server 140 in response to receipt of the authorisation at step 382, or by the issuer server 150 in response to the authorisation itself at step 380.

The transaction is settled by the issuer paying the acquirer in a lump sum in the usual manner. The issuer recoups the purchase amount (together with any interest and/or fees) in instalments from the consumer's payment account per the instalment conditions of the simulation.

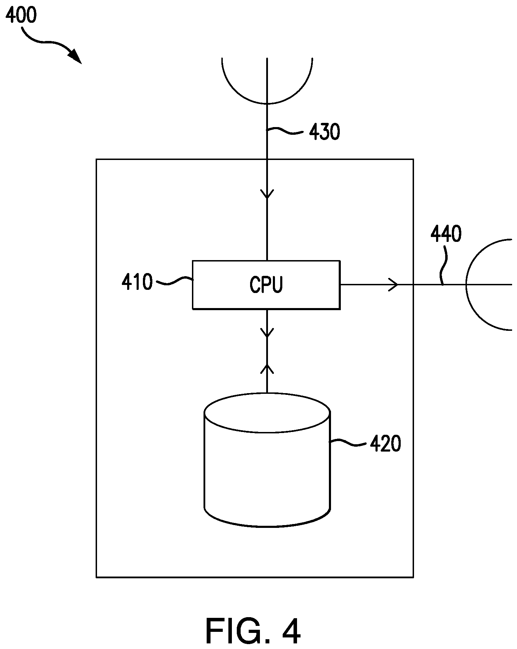

Figure 4 schematically illustrates a computer 400, such as a server, which can perform the methods described herein. The computer 400 comprises a processor 410 in communication with a memory 420 storing computer-executable instructions which, when executed by the processor 410, cause the method to be performed. The processor 410 is in communication with a receiver 430 and a transmitter 440 (which may be collocated in a transceiver module), so that messages can be transmitted and received by the computer 400.

The methods described herein allow consumers to pay in instalments for particular purchases as desired, without any modifications to the merchant's POS being required, and without the merchant taking on any additional risk compared to accepting a standard debit or credit account funded transaction.

Other embodiments will be apparent to those skilled in the art from consideration of the specification and practice of the embodiments disclosed herein. It is intended that the specification and examples be considered as exemplary only.

Where a message is said to be "relayed" herein, this can indicate it being passed on verbatim, or it being translated, transliterated, reformatted, encoded or otherwise modified without losing its core information content, prior to transmission.

As used herein, the term "obtaining" encompasses determining, generating, receiving without prompting, and requesting then receiving.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Such a communication link can optionally further comprise one or more relaying transceivers.

User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A computer-implemented method comprising:
receiving data indicating a price together with an identifier from a user device;
responsive thereto, obtaining one or more sets of instalment conditions and transmitting them to the user device;
subsequently receiving a simulation according to one of the sets of instalment conditions from the user device;
responsive thereto, obtaining a pre-authorisation of the simulation, obtaining a one-time virtual card number (OTVCN) and transmitting the OTVCN to the user device.

2. The method of claim 1, further comprising:
subsequent to transmitting the OTVCN to the user device, receiving the OTVCN in a transaction request from a payment network;
responsive thereto, obtaining an authorisation of the transaction request and transmitting the authorisation of the transaction request to the payment network.

3. The method of either of claims 1 or 2, wherein the one or more sets of instalment conditions are determined according to a risk profile linked to the identifier.

4. The method of any of claims 1 to 3, wherein the identifier comprises two or more of a user device identifier, an application identifier, a user identifier and an account identifier.

5. The method of any preceding claim, wherein the OTVCN is:
obtained, and/or
transmitted, and/or
when dependent on claim 2, received
in a tokenised form.

6. The method of any preceding claim, further comprising, as part of the obtaining of the pre-authorisation, determining that the simulation is not expired.

7. The method of claim 2, or any of claims 3 to 6 as dependent thereon, further comprising, as part of the obtaining of the authorisation, determining that the OTVCN is not expired.

8. The method of any preceding claim, performed at a service provider server, wherein obtaining the pre-authorisation of the simulation comprises:
relaying the simulation to an issuer server, the issuer server being a server of an issuer of a payment account with which the identifier is linked; and
receiving the pre-authorisation of the simulation from the issuer server.

9. The method of claim 8, wherein obtaining the one or more sets of instalment conditions comprises:
transmitting a request for instalment conditions to the issuer server, the request indicating the price and the account; and
subsequently receiving the one or more sets of instalment conditions from the issuer server.

10. The method of either of claims 8 or 9, wherein obtaining the OTVCN comprises, responsive to obtaining the pre-authorisation of the simulation, generating the OTVCN locally.

11. The method of any of claims 8 to 10 as dependent on claim 2, wherein obtaining the authorisation of the transaction request comprises:
relaying the transaction request to the issuer server; and
subsequently receiving authorisation of the transaction request from the issuer server.

12. The method of any of claims 8 to 11, wherein the service provider is a card association.

13. A computer-readable medium storing computer-executable instructions which, when executed by a processor, cause the method of any preceding claim to be performed.

14. A computer, or system comprising a plurality of computers in communication with one another, configured to perform the method of any of claims 1 to 12.

15. A system comprising the computer or system of claim 14 and the user device.
